# EUROPEAN PATENT SPECIFICATION

(11) **EP 1 245 334 B1**
(45) Date of publication and mention of the grant of the patent: **06.06.2007**
(21) Application number: 02006470.5
(22) Date of filing: 22.03.2002
(51) Int. Cl.: B24B 9/14, B24B 55/00, B24B 55/02

(54) **Eyeglass lens processing apparatus**
Brillenglasbearbeitungsvorrichtung
Dispositif d'usinage de lentille ophtalmique

(30) Priority: 26.03.2001 JP 2001087109
(43) Date of publication of application: 02.10.2002
(73) Proprietor: Nidek Co., Ltd., Gamagori-shi, Aichi (JP)
(72) Inventor: Mizuno, Toshiaki, Gamagori-shi, Aichi (JP)
(74) Representative: Weber, Joachim

(56) References cited:
- US-A- 2 236 714
- US-A- 2 871 627
- US-B1- 6 168 505
- PATENT ABSTRACTS OF JAPAN vol. 2000, no. 07, 29 September 2000 (2000-09-29) & JP 2000 108031 A (TOYODA MACH WORKS LTD), 18 April 2000 (2000-04-18)

## Description

### BACKGROUND OF THE INVENTION

The present invention relates to an eyeglass lens processing apparatus for processing a peripheral edge of an eyeglass lens. An eyeglass lens processing apparatus according to the preamble of claim 1 is known from document US 2 871 627 A.

An apparatus for processing a peripheral edge of an eyeglass lens has, inside the apparatus, a grinding wheel (processing tool) for grinding (processing) a peripheral edge of the lens and a grinding-wheel rotating (processing tool driving) motor for rotatively driving the grinding wheel (processing tool). Since a large driving force is required in order to rotatively drive a heavy grinding wheel (processing tool), a grinding-wheel rotating motor with an output of about 400 W or more is frequently used.

In addition, grinding water (cutting water) is supplied to cool the portion of the lens being ground (processed) and remove the grinding (processing) debris.

If a grinding-wheel rotating motor having a large output is used, the amount of heat generated becomes large, so that it becomes necessary to cool the motor. As a system of cooling the motor, there is air cooling using a fan, but air cooling using the fan is inferior in its cooling effect as compared with water cooling. In addition, if the fan is used, the grinding (processing) dust produced at the time of lens grinding (processing) is sucked, which can cause a fault in mechanical portions of the interior of the apparatus.

In view of the above-described problems of the conventional art, the object of the invention is to provide an eyeglass lens processing apparatus in which the effect of cooling the lens grinding (processing) motor is enhanced without making the configuration of the apparatus complex.

### SUMMARY OF THE INVENTION

The present invention provides an eyeglass lens processing apparatus according to claim 1. Preferred embodiments are disclosed in the dependent claims 2 to 6.

### BRIEF DESCRIPTION OF THE DRAWINGS

Fig. 1 is a schematic diagram of a lens processing apparatus in accordance with a first embodiment of the invention; and
Fig. 2 is a schematic diagram of a lens processing apparatus in accordance with a second embodiment of the invention.

### DESCRIPTION OF THE PREFERRED EMBODIMENT

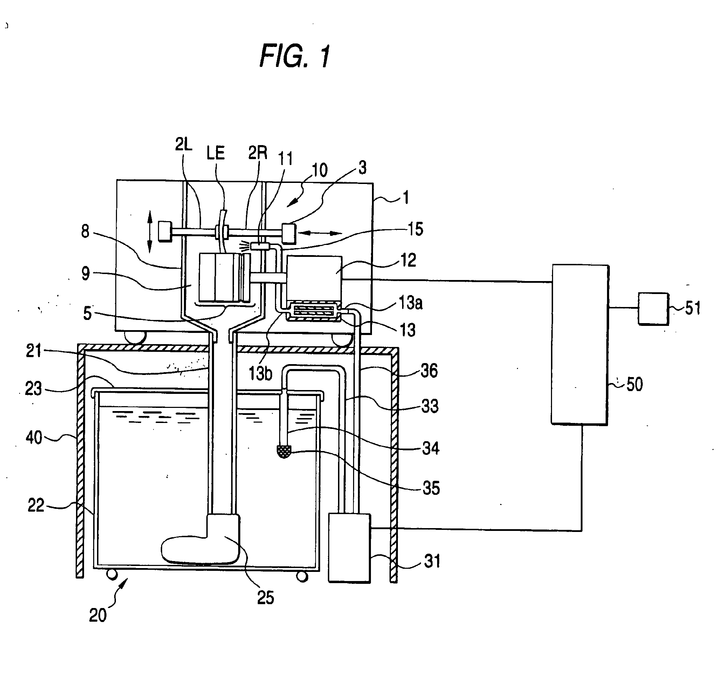

Referring now to the drawings, a description will be given of the embodiments of the invention. Fig. 1 is a schematic diagram of a lens processing apparatus in accordance with a first embodiment of the invention. The lens processing apparatus is mainly comprised of a main body 1 of the processing apparatus, a table 40 for placing the main body 1 thereon, and a tank unit 20 disposed inside the table 40 to circulate grinding water.

A grinding section 10, which includes two lens rotating shafts 2R and 2L for holding a subject lens LE, a carriage section 3 to which the shafts 2R and 2L are rotatably attached, a grinding wheel 5 attached to a rotating shaft of a motor 12 to grind the peripheral edge of the lens LE, and so on, is disposed inside the housing of the main body 1. The carriage section 3 is arranged to be movable in the axial direction of the shafts 2R and 2L and to be relatively movable with respect to the grinding wheel 5. It should be noted that since the known construction in JP-A-5-212661 (U.S. Pat. No. 5,347,762, Re. 35,898) and the like by the assignee of this application can be used as this grinding section 10, a detailed description thereof will be omitted.

The grinding wheel 5 is made up of three grinding wheels including a rough grinding wheel for plastics, a rough grinding wheel for glass, and a finishing grinding wheel having a beveling V-groove and a flat grinding surface, and is rotated by the motor 12. The motor 12 is mounted on an unillustrated base of the main body 1 so as to come into contact with a water-cooled cooler 13 for cooling the generated heat. The cooler 13 is formed of a metallic member (aluminum, copper or the like) having excellent heat conductivity, and a channel, in which grinding water flows to be used as cooling water, is formed in its interior.

In addition, a grinding chamber 9 is formed inside the main body 1 by a waterproof cover 8 in such a manner as to surround the lens LE held by the lens rotating shafts 2R and 2L as well as the grinding wheel 5. A nozzle 11 for jetting the grinding water extends in this grinding chamber 9.

Reference numeral 22 denotes a storage tank for storing the grinding water. A water suction pipe 34 extending downward is attached to a cover 23 of the tank 22, and a coarse mesh-like filter 35 is attached to a lower end of the pipe 34. A water suction tube 33 is connected to an upper end of the pipe 34 projecting from an upper surface of the cover 23, while the other end of the water suction tube 33 is connected to a suction pump 31. Further, a water supply tube 36 is connected to the suction pump 31, while the other end of the water supply tube 36 is connected to an inlet port 13a of the cooler 13. Further, a discharge port 13b of the cooler 13 and the nozzle 11 are connected by a water supply tube 15. By virtue of the above-described configuration, the grinding water sucked from inside the tank 22 through the water suction pipe 34 and the water suction tube 33 by the driving of the pump 31 is fed to the nozzle 11 through the water supply tube 36, the cooler 13, and the water supply tube 15.

The grinding water jetted from the nozzle 11 and the grinding debris are received by the cover 8 during lens grinding. A drain pipe 21 is connected to a drain port located in a lower portion of the cover 8, and the drain pipe 21 extends to the interior of the storage tank 22. A removable filter 25 which also serves as a bag for collecting the grinding debris is attached to a lower end of the drain pipe 21.

Reference numeral 50 denotes a control unit provided in the main body 1. Connected to the control unit 50 are the pump 31, the motor 12, unillustrated other motors of the grinding section 10, and the like.

Next, a description will be given of the operation of the eyeglass lens processing apparatus constructed as described above. When lens grinding is started by pressing a grinding start switch 51, the motor 12 is driven by the control unit 50 to rotate the grinding wheel 5. In addition, the pump 31 is driven, and the grinding water sucked from the tank 22 is fed to the cooler 13 through the water supply tube 36. The heat generated from the motor 12 is transmitted to the cooler 13 through a metal frame of the motor 12 itself, and is radiated to the grinding water at the internal channel of the cooler 13. Consequently, the heated motor 12 is cooled.

The grinding water which passed through the interior of the cooler 13 is sent to the nozzle 11 through the water supply tube 15, and is jetted into the grinding chamber 9. The jetted grinding water and the grinding debris produced during the grinding are received by the cover 8, and are drained into the tank 22 through the drain pipe 21. The grinding debris are collected by the filter 25. The grinding water stored in the tank 22 is sucked again by the pump 31, and is recirculated in the above-described manner.

In accordance with the above-described construction, since the grinding water is also used as cooling water for the motor 12, the motor 12 can be cooled by a simple arrangement without substantially changing the overall configuration of the apparatus. In addition, water cooling is free of the problem of suction of the grinding dust by a fan, and makes it possible to compact the motor compact since the cooling effect is higher than air cooling using the fan.

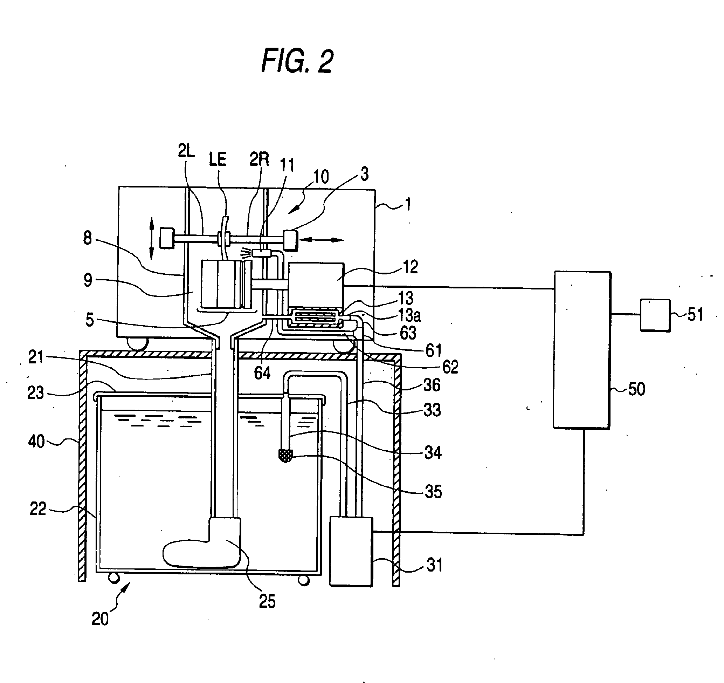

Fig. 2 is a diagram illustrating a second embodiment. Those elements that are equivalent to those of the first embodiment are denoted by the same reference numerals. In the apparatus of the second embodiment, the water supply tube 36 is branched into two water supply tubes 62 and 63 by a brancher 61. The water supply tube 62 is connected to the nozzle 11, while the water supply tube 63 is connected to the inlet port 13a of the cooler 13. The grinding water which passed through the interior of the cooler 13 is directly released into the cover 8 by a water supply tube 64. In the case of the second embodiment, since the paths of the grinding water are made independent on the nozzle 11 side and the cooler 13 side, respectively, sufficient effects can be obtained in the cooling of the motor 12 and the cooling of the ground portion of the lens LE.

It should be noted that the processing tool for processing the lens is not limited to a grinding wheel, and it is possible to use a known processing tool, and that the case where a driving means such as a motor for driving that processing tool is cooled by the grinding (processing) water is included in the claims.

As described above, in accordance with the claims, it is possible to enhance the effect of cooling the lens grinding (processing) motor without making the configuration of the apparatus complex.

## Claims

1. An eyeglass lens processing apparatus comprising:
a processing tool (5) for processing a periphery of a lens;
driving means (12) for driving the processing tool;
a processing chamber (9) in which the processing tool is disposed;
water supplying means for supplying lens processing water into the processing chamber; and
cooling means for cooling the driving means, **characterised in that** the cooling means use the water supplied by the water supplying means.

2. The apparatus of claim 1, wherein:
the cooling means includes a water-cooled cooler (13); and
the water supplying means includes a first water supply tube (36) for supplying the water to the cooler.

3. The apparatus of claim 2, wherein the water supplying means includes a nozzle (11) for jetting the water into the processing chamber, and a second water supply tube (15) for supplying the water from the cooler to the nozzle.

4. The apparatus of claim 2, wherein the water supplying means includes a nozzle (11) for jetting the water into the processing chamber, a second water supply tube (62) for supplying the water, supplied by the first water supply tube, to the nozzle, and a third water supply tube (63) for supplying the water, supplied by the first water supply tube, to the cooler.

5. The apparatus of claim 2, wherein the water supplying means includes a water storage tank (22), and a pump (31) for sucking the water inside the tank and supplying the sucked water to the first water supply tube.

6. The apparatus of claim 5, further comprising:
drain means (21) for discharging the water, supplied into the processing chamber, into the tank.

## Patentansprüche

1. Brillenlinsen-Bearbeitungsgerät umfassend:
ein Bearbeitungswerkzeug (5) zum Bearbeiten eines Randgebietes einer Linse;
Antriebsmittel (12) zum Antreiben des Bearbeitungswerkzeugs;
eine Bearbeitungskammer (9), in der das Bearbeitungswerkzeug angeordnet ist;
Wasserzuführungsmittel, um Linsenbearbeitungswasser in die Bearbeitungskammer zuzuführen; und
Kühlmittel zum Kühlen der Antriebsmittel, **dadurch gekennzeichnet, dass** das Kühlmittel das Wasser verwendet, das von den Wasserzuführungsmitteln zugeführt wird.

2. Gerät gemäß Anspruch 1, wobei:
das Kühlmittel eine wassergekühlte Kühleinrichtung (13) umfasst; und das Wasserzuführungsmittel ein erstes Wasserzuführungsrohr (36) zum Zuführen des Wassers zu der Kühleinrichtung umfasst.

3. Gerät gemäß Anspruch 2, wobei das Wasserzuführungsmittel eine Düse (11) zum Ausstoßen des Wassers in die Bearbeitungskammer und ein zweites Wasserzuführungsrohr (15) umfasst, um das Wasser von der Kühleinrichtung der Düse zuzuführen.

4. Gerät gemäß Anspruch 2, wobei das Wasserzuführungsmittel eine Düse (11) umfasst, um das Wasser in die Bearbeitungskammer auszustoßen, ein zweites Wasserzuführungsrohr (62), um das Wasser, das von dem ersten Wasserzuführungsrohr zugeführt wird, der Düse zuzuführen, und ein drittes Wasserzuführungsrohr (63), um das Wasser, das durch das erste Wasserzuführungsrohr zugeführt wird, der Kühleinrichtung zuzuführen.

5. Gerät gemäß Anspruch 2, wobei das Wasserzuführungsmittel einen Wasservorratstank (22) und eine Pumpe (31) zum Ansaugen des Wassers innerhalb des Tanks und Zuführen des angesaugten Wassers zu dem ersten Wasserzuführungsrohr umfasst.

6. Gerät gemäß Anspruch 5, ferner umfassend:
Entleerungsmittel (21) zum Ablassen des Wassers, das in die Bearbeitungskammer zugeführt ist, in den Tank.

## Revendications

1. Dispositif d'usinage de lentille ophtalmique, comprenant :
un outil d'usinage (5) pour usiner une périphérie d'une lentille ;
des moyens d'entraînement (12) pour entraîner l'outil d'usinage ;
une chambre d'usinage (9) dans laquelle l'outil d'usinage est disposé ;
des moyens d'alimentation d'eau pour alimenter l'eau d'usinage de lentille dans la chambre d'usinage; et
des moyens de refroidissement pour refroidir les moyens d'entraînement,
**caractérisé en ce que** les moyens de refroidissement utilisent l'eau alimentée par les moyens d'alimentation d'eau.

2. Dispositif selon la revendication 1, dans lequel :
les moyens de refroidissement comprennent un dispositif de refroidissement refroidi par eau (13); et
les moyens d'alimentation d'eau comprennent un premier tube d'alimentation d'eau (36) pour alimenter l'eau au dispositif de refroidissement.

3. Dispositif selon la revendication 2, dans lequel les moyens d'alimentation d'eau comprennent une buse (11) pour faire jaillir l'eau dans la chambre d'usinage, et un second tube d'alimentation d'eau (15) pour alimenter l'eau du dispositif de refroidissement à la buse.

4. Dispositif selon la revendication 2, dans lequel les moyens d'alimentation d'eau comprennent une buse (11) pour faire jaillir l'eau dans la chambre d'usinage, un second tube d'alimentation d'eau (62) pour alimenter l'eau, alimentée par le premier tube d'alimentation d'eau à la buse, et un troisième tube d'alimentation d'eau (63) pour alimenter l'eau, alimentée par le premier tube d'alimentation d'eau au dispositif de refroidissement.

5. Dispositif selon la revendication 2, dans lequel les moyens d'alimentation d'eau comprennent un réservoir de stockage d'eau (22), et une pompe (31) pour aspirer l'eau à l'intérieur du réservoir et alimenter l'eau aspirée au premier tube d'alimentation d'eau.

6. Dispositif selon la revendication 5, comprenant en outre :
des moyens d'évacuation (21) pour évacuer l'eau, alimentée dans la chambre d'usinage, dans le réservoir.
